# EUROPEAN PATENT APPLICATION

(11) **EP 2 824 972 A1**
(43) Date of publication of application: **14.01.2015**
(21) Application number: 13186322.7
(22) Date of filing: 27.09.2013
(51) Int. Cl.: H04W 48/20, H04W 84/04, H04W 72/12, H04W 74/08

(54) **Resource requests in small cell networks**

(30) Priority: 09.07.2013 EP 13175803
(71) Applicant: FUJITSU LIMITED, Kawasaki-shi Kanagawa 211-8588 (JP)
(72) Inventor: Moulsley, Timothy, Caterham, Surrey CXR3 5EE (GB); Bucknell, Paul, Arundel Place, BN2 1SP (GB)
(74) Representative: Stebbing, Timothy Charles

(57) **Abstract**

A Small Cell Network in which a terminal (1) is simultaneously served by a macro cell (10) and one or more small cells (20, 22, 24). When suitable uplink resources are not provided for data (PUSCH), the terminal (1) selects a cell and/or resource on which to transmit a scheduling request, or if no resource is allocated for scheduling requests (SR) the invention allows the terminal to select a suitable uplink cell and/or signature for a random access transmission (PRACH), and/or characteristic of a signal used to request such resources. A RACH transmission may also take place if SR has been transmitted more than a defined number of times without PUSCH resources being granted. Use of the most appropriate cell/resource for the request will improve the achievable data rate and system capacity.

## Description

### Field of the Invention

The present invention relates to cellular wireless networks, particularly to so-called Small Cell networks and more particularly to the transmission by terminals of requests for resources in such networks.

### Background of the Invention

Cellular wireless networks are widely known in which base stations (BSs) communicate with terminals (also called user equipments (UEs), or subscriber or mobile stations) within range of the BSs. The geographical areas covered by base stations are generally referred to as cells, and typically many BSs are provided in appropriate locations so as to form a network or system covering a wide geographical area more or less seamlessly with adjacent and/or overlapping cells. (In this specification, the terms "system" and "network" are used synonymously except where the context requires otherwise). In each cell, the available bandwidth is divided into individual resource allocations for the user equipments which it serves.

### Basic LTE Network

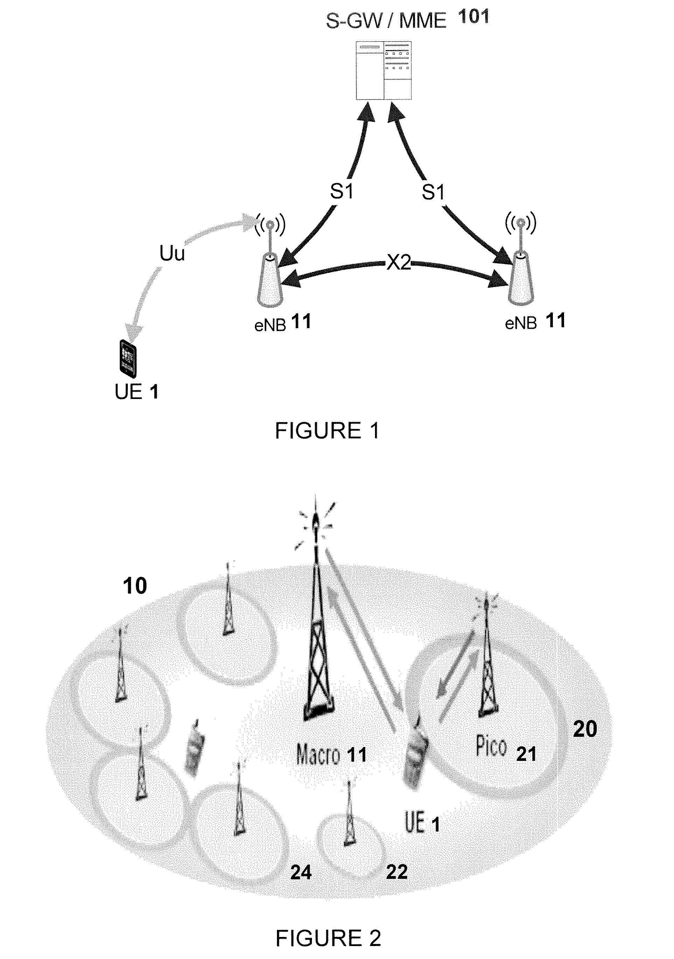

One type of cellular wireless network is based upon the set of standards referred to as Long-Term Evolution (LTE). The current version of the standard, Release 11, is also referred to as LTE-A (LTE-Advanced). The network topology in LTE is illustrated in Figure 1. As can be seen, each terminal 1, called a UE in LTE, connects over a wireless link via a Uu interface to a base station in the form of an enhanced node-B or eNodeB 11. It should be noted that various types of eNodeB are possible. An eNodeB may support one or more cells which may be at different carrier frequencies having differing transmit powers and different antenna configurations, and therefore providing coverage areas (cells) of differing sizes. Multiple eNodeBs deployed in a given geographical area constitute a wireless network called the E-UTRAN (and henceforth generally referred to simply as "the network"). Cells in an LTE network can operate either in a Time Division Duplex, TDD, mode in which the uplink, UL, and downlink, DL, are separated in time but use the same carrier frequency, or Frequency Division Duplex, FDD, in which the uplink and downlink occur simultaneously at different carrier frequencies.

Each eNodeB 11 in turn is connected by a (usually) wired link using an interface called S1 to higher-level or "core network" entities 101, including a Serving Gateway (S-GW), and a Mobility Management Entity (MME) for managing the system and sending control signalling to other nodes, particularly eNodeBs, in the network. In addition (not shown), a Packet Data Network (PDN) Gateway (P-GW) is present, separately or combined with the S-GW, to exchange data packets with any packet data network including the Internet. Thus, communication is possible between the LTE network and other networks.

### Small Cell Network (SCN)

Figure 1 shows what is sometimes called a "homogeneous network"; that is, a network of base stations in a planned layout and which have similar transmit power levels, antenna patterns, receiver noise floors and similar backhaul connectivity to the core network. Current wireless cellular networks are typically deployed as homogeneous networks using a macro-centric planned process. The locations of the base stations are carefully decided by network planning, and the base station settings are properly configured to maximise the coverage and control the interference between base stations. However, it is widely assumed that future cellular wireless networks will adopt a "heterogeneous network" structure composed of two or more different kinds of cell, also (and henceforth) referred to as a Small Cell Network or SCN.

Figure 2 depicts a simple SCN. The large ellipse 10 represents the coverage area or footprint of a Macro cell provided by a base station (Macro BS) 11. The smaller ellipses 20, 22 and 24 represent Small cells within the coverage area of Macro cell 10, each having a respective base station (exemplified by Pico BS 21). Here, the Macro cell is a cell providing basic "underlay" coverage in the network of a certain area, and the Small cells are overlaid over the Macro cell, using the same or different carrier frequencies for capacity boosting purposes particularly within so-called "hot spot zones". A UE 1 is able to communicate both with Macro BS 11 and Pico BS 21 (but not necessarily simultaneously) as indicated by the arrows in the Figure. When a UE starts to use a given cell for its communication, that cell is said to be "activated" for that UE, whether or not the cell is already in use by any other UEs. Incidentally, although the Macro and Small cells are depicted here as being provided by different base stations, this is not essential and the same base station may be responsible for both a Macro cell and a Small cell. For example, a cell operating in a higher frequency band is likely to experience greater pathloss, and thus have shorter range, than one in a lower frequency band; thus the same base station may provide both a lower-frequency Macro cell and a higher-frequency Small cell.

Although only two types of cell are shown in Figure 2, various types of Small cell may be present in a SCN including (in decreasing order of size), cells similar to current Micro, Pico and Femto cells. Femto and Pico cells can be overlaid on either Macro or Micro cells. Thus, networks can be designed such that the Macro cells provide blanket coverage while the Micro, Pico and/or Femto cells (or Small Cells) provide additional capacity. The envisaged Small Cells may also correspond to a New Carrier Type (NCT) not yet defined in LTE specifications.

### Carrier Aggregation (CA)

SCNs will support and enhance various capacity-boosting schemes to be applied to UEs, including so-called Carrier Aggregation (CA) which has been introduced into 3GPP (in the homogeneous network context) since LTE Release 10. Details of CA as applied to LTE are given in the 3GPP standard TS36.300, hereby incorporated by reference.

In CA, two or more Component Carriers (CCs) at different carrier frequencies are aggregated in order to support wider transmission bandwidths up to 100MHz (made up of a maximum of five CCs each having a bandwidth around their carrier frequency of up to 20MHz). A UE may simultaneously receive or transmit on one or multiple CCs depending on its capabilities by being allocated a resource extending over a set of subcarriers within the CC bandwidth and for defined time periods within one or more subframes.

A UE using CA has a plurality of serving cells, one for each CC. Management of connections of UEs to the network, broadcast of system information and establishment of radio bearers is part of Radio Resource Control (RRC). The UE has only one RRC connection with the network and the CC on which a UE receives system information when this connection is established re-established or handed over is called the Primary Cell or Pcell. All other CCs are called Secondary Cells or Scells. The CCs may for example correspond to Macro and Small cells in a SCN. Thus, for example, the same UE may use the Macro cell as its "primary" cell (Pcell) and a Small cell as a "secondary" cell (Scell). As well as possibly having different carrier frequencies, the Macro and Small cells may have different bandwidths. Generally, each cell is provided by base station antennas at a single site, but this does not exclude the possibility of one cell being provided by antennas at different sites.

A potential issue with CA in SCNs is that at least some of the CCs are likely to be provided by small base stations such as Home eNodeBs and femtocells, which use broadband internet for their backhaul connectivity to the network, and are therefore liable to incur greater latency (including a greater time taken to exchange information with other base stations) compared with macro cell eNodeBs.

Where the CCs are provided by geographically-separated base stations, these base stations will also generally experience different signal propagation delays from the UE. In order to take advantage of CA in the SCN scenario, Release 11 of LTE provides for multiple uplink Timing Advances (TAs), by which a UE can ensure that its uplink transmissions arrive in synchronization with transmissions from other UEs at the base stations providing the cells. Since the same base station may provide more than one cell, the concept of a Timing Advance Group (TAG) is used to group together carriers with the same TA value. However, various aspects of how CA may be most advantageously applied to the SCN have yet to be determined, as explained later.

### Uplink Channels in LTE

Since the embodiments to be described concern scheduling requests (SRs) in SCNs, some further explanation will be given of the nature of, and need for, these SRs.

An LTE system is a scheduled system in which transmission is organized in "frames" each containing twenty slots, two consecutive slots being referred to as a "subframe". For each transmission time interval of one or more subframes, a new scheduling decision is taken regarding which UEs are assigned/allocated to which time/frequency/spatial/code resources during this transmission time interval.

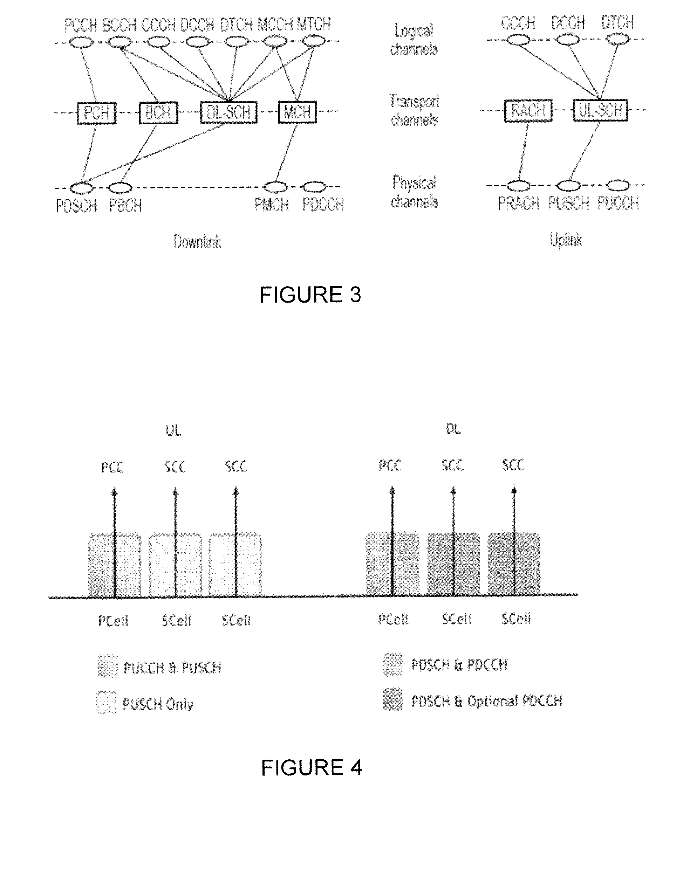

Several "channels" for data and signalling are defined at various levels of abstraction within the network. Figure 3 shows some of the channels defined in LTE-based systems at each of a logical level, transport layer level and physical layer level, and the mappings between them. The mapping of logical channels to transport channels is one task of a Media Access Control, MAC entity in an eNB and UE. MAC is also responsible for activation/deactivation of cells, HARQ (see below), and other functions.

In Figure 3, physical channels defined in the uplink are a Physical Random Access Channel (PRACH), a Physical Uplink Shared Channel (PUSCH), and a Physical Uplink Control Channel (PUCCH). An uplink physical channel corresponds to a set of resources carrying information originating from higher layers. In addition to the uplink channels, uplink signals such as reference signals, primary and secondary synchronization signals are typically defined.

The above mentioned 3GPP TS 36.300 provides an overall description of the radio interface protocol architecture used in LTE-based systems and in particular section 5.2 of 3GPP TS 36.300 relates to uplink transmission schemes. The physical channels in the uplink of LTE-based systems are described, for example, in 3GPP TS 36.211, section 5, which is hereby also incorporated by reference.

User data and optionally also higher-level control signalling is carried on the Physical Uplink Shared Channel PUSCH. The physical uplink control channel PUCCH carries uplink control information such as a scheduling request (SR), explained in more detail shortly, and a channel quality indicator (CQI) report. As illustrated in Figure 3, there is a downlink counterpart channel to the PUCCH, which is the Physical Downlink Control Channel (PDCCH) for carrying, as well as other messages, an uplink scheduling grant, possibly in response to the scheduling request. Incidentally, in LTE-A there is also an enhanced PDCCH called EPDCCH, which allows coordination among eNodeBs for reducing inter-cell interference.

The uplink scheduling grant also indicates the transmission rate (i.e. modulation and code rate). If PUSCH transmission occurs when the PUCCH would otherwise be transmitted, the control information to be carried on PUCCH may be transmitted on PUSCH along with user data. Simultaneous transmission of PUCCH and PUSCH from the same UE may be supported if enabled by higher layers. The PUCCH may support multiple formats as indicated in 3GPP TS 36.211, section 5.4.

Because transmissions between UE and base station are prone to transmission errors due to interference, a procedure is available for each packet sent in uplink and downlink direction to be acknowledged by the receiver. This is done by sending Hybrid Automatic Repeat Request (HARQ) acknowledgments or non-acknowledgments (ACK/NACK) on control channels. On the downlink, ACK/NACK is sent on a Physical HARQ Indicator Channel (PHICH). On the uplink ACK/NACK is sent on PUCCH.

The Physical Random Access Channel PRACH is used to carry the Random Access Channel (RACH) for accessing the network if the UE does not have any allocated uplink transmission resource. If a scheduling request (SR) is triggered at the UE, for example by arrival of data for transmission on PUSCH, when no PUSCH resources have been allocated to the UE, the SR is transmitted on a dedicated resource for this purpose. The transmission of SR is effectively a request for uplink radio resource on the PUSCH for data transmission. If no such resources have been allocated to the UE, the RACH procedure on PRACH is initiated. A RACH transmission may also take place, on the same cell, if SR has been transmitted more than a defined number of times without PUSCH resources being granted.

In this context, the PRACH signature can be considered as a request for grant of resources to send uplink data on PUSCH, producing a similar effect as transmission of SR, although conceptually SR and PRACH are quite different.

### Channels in CA

Having outlined some of the more important channels defined in LTE, their relationship to cells/CCs in the CA scenario can now be described using Figure 4.

As shown in Figure 4, under current LTE proposals, each Pcell can transmit PDCCH to a UE. An SCell may (or may not) provide PDCCH to a UE, depending on UE capabilities; however, uplink data on PUSCH, and BSR and some RACH can be transmitted by a UE with the required capabilities on both PCell and SCell. For LTE up to and including Release 11 the uplink control channel (PUCCH), which supports SR, is only transmitted on the PCell. Similarly, PRACH for scheduling requests is only transmitted on the PCell. However, these restrictions may not apply in future Releases.

If an Scell does not carry PDCCH, this implies that the scheduling information for that cell has to be carried in PDCCH of another cell (typically the Pcell) - so called cross-carrier scheduling. The PCell and SCells should have identical or very similar transmission timing which allows, for example, PDCCH on one cell to schedule resources on a different cell, and ACK/NACKs for PDSCH transmissions on SCells to be sent on the PCell. SCells may have different transmission timing at the UE in order to allow for the possibility that the cells are supported by antennas at different geographical sites. A PCell and/or SCells with the same timing would belong to the same TAG (Time Alignment Group). However, because of the tight timing synchronization requirements between PUCCH on the PCell and PDSCH on the SCells, PCells and SCells can be assumed to be controlled by the same eNodeB.

### Scheduling Request (SR) and Buffer Status Report (BSR)

To explain the above mentioned SR in more detail, in order to schedule uplink transmissions efficiently the network needs to be aware of the amount of data that the UE needs to transmit, the priority of such data (in the form of data streams of different types and priorities, reflecting different services being provided to the UE), and the uplink channel conditions. In LTE specifications this is provided for by the UE sending BSRs (buffer status reports) along with data transmissions via PUSCH, and by transmission of UL sounding reference signals (SRS). However, if the UE has no PUSCH resources available, there is no means to send a BSR. In such cases a scheduling request is triggered in the UE.

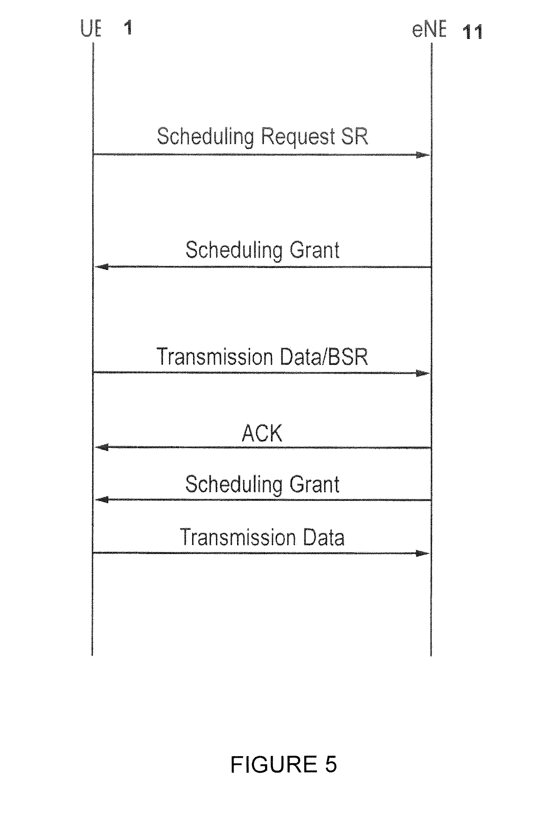

The process is shown in Figure 5. Assuming that the UE 1 already has some allocated uplink transmission resource for this purpose, it sends a Scheduling Request SR to the base station (eNodeB 11) as shown by the topmost arrow in the Figure, using pre-allocated resources on PUCCH. The SR indicates that the UE needs to be granted UL resources on PUSCH. In some cases the UE may not have an SR resource allocation on PUCCH, and then the RACH procedure would be initiated as already mentioned. A RACH transmission may also take place if SR has been transmitted more than a defined number of times without PUSCH resources being granted. SR and PRACH are examples of a "request for resources" as referred to below.

Following the identification by the UE of the need for PUSCH resources, and triggering SR transmission, on receiving the SR the network will typically send a PDCCH message with a small resource allocation on PUSCH. This is indicated by the second arrow, labelled "Scheduling Grant" in Figure 5. A large allocation could be granted, but at this point the network does not have an accurate view of the UE buffer state or the UL channel conditions, so a large resource grant could well be wasted. The same PDCCH grant message may be used to trigger an aperiodic SRS in order to obtain the uplink channel state.

Receipt of the Scheduling Grant enables the UE to send the transmission marked "Transmission Data/BSR" in Fig. 5. As indicated, this PUSCH transmission will typically include a buffer status report BSR, and after successful reception, the network will have knowledge of both UE buffer status and UL channel state. This allows efficient scheduling of PUSCH resources to match the UE traffic requirements. Conventionally, only one SR may be pending at a given time. A BSR supersedes the SR in the sense that when a SR is triggered, it is considered as pending until it is cancelled by transmission of a BSR which contains buffer status up to (and including) the last event that triggered a BSR, or when the UL grant(s) can accommodate all pending data available for transmission.

The BSR indicates the amounts of data buffered at the UE (i.e., ready for transmission on the uplink) with respect to each of up to four Logical Channel Groups, each LCG in turn comprising one or more Logical Channels, where each Logical Channel may be regarded as representing a specific service or application on the UE. The assignment of data to a LCG may be done on the basis of required quality of service (e.g. priority, delay requirements). In LTE the LCGs are processed with different priorities. Thus, the concept of LCGs allows the BSR to provide information on data amounts categorised by priority. The amount of information to be signalled using LCGs is less than would be required for indicating buffer status for all logical channels individually.

Thus, the eNodeB responds to the UE by sending, in addition to an ACK as indicated in the Figure, a Scheduling Grant suitable for the UE's traffic requirements. Finally, as shown by the arrow labelled "Transmission Data", the UE sends the data contained in its buffer.

The SR and BSR protocols are further described in 3GPP TS 36.321, sections 5.4.4, 5.4.5, and 6.1.3, and the SR procedure for a terminal procedure for determining physical uplink control channel assignment is described in 3GPP TS 36.213, section 10, which is also hereby incorporated by reference.

To summarise the foregoing, currently in LTE buffer status reports are used to indicate to the network information about the data ready to be transmitted from the terminal in the uplink. Data streams corresponding to logical channels are associated with logical channel groups, and depending on the arrival and priority of new data, a buffer status report (BSR) may be triggered. If no (PUSCH) resources are available to carry a BSR, a scheduling request (SR) may be transmitted. If no resources for SR are allocated, then a random access (RACH) transmission may take place. When a UE is served by more than one cell (a macro cell and one or more small cells for example), one of the cells (typically the macro cell) is designated the primary cell (PCell) and both SR and PRACH are conventionally transmitted via the PCell.

The "Small Cell" concept which is currently being studied in 3GPP provides for the possibility of a terminal being supported by both a macro cell and one or more small cells, operating at the same or different carrier frequencies. This has some similarities with CA, but the timing relation between the cells may be less strictly controlled for small cells, and the cells may be controlled by different eNodeBs. Cells at significantly different frequencies (as envisaged for one of the small cell scenarios) are likely to have different channel conditions and traffic capacities. The small cell carrier may have higher data rate capacity, but less consistent geographical coverage. Whilst the macro cell will normally provide both UL and DL, this is not necessarily the case for the small cells, which may be UL-only or DL-only cells. In addition, the backhaul capacity and latency may be different for macro cells and small cells. Therefore, under the Small Cell concept it would be advantageous for the network to be able to control both which data traffic from a given UE is routed via each carrier, and the arrangements for reporting uplink buffer status and scheduling requests, depending on channel conditions, which are likely to vary with time and location.

### Summary of the Invention

According to a first aspect of the present invention, there is provided a wireless communication method in which a terminal communicates with a network via at least two cells of a plurality of cells and transmits a request for uplink resources, wherein the terminal selects at least one of:
at least one cell from among said plurality of said cells for transmission of said request,
a resource for transmission of said request from among a plurality of resources provided by a cell; and
a characteristic of a signal used to transmit said request;
wherein the selection is in dependence on at least one of:-
the reason for the request;
the characteristics of an uplink channel for transmission of the request; and
the preference of the network.

The method may further comprise:
the terminal sending the request for uplink resources via at least one first cell in accordance with the selection;
the network responding to the request for uplink resources by notifying the terminal, via at least one second cell, of a grant of resources; and
the resources being resources applying to at least one third cell.

Thus, in embodiments, the terminal selects at least one first cell (and possibly also a resource for the transmission of the request and/or a characteristic of the signal carrying the request). The selection of the first, second and third cells can be made independently, although there may be overlap between them. Thus, the first and second cells, and/or the second and third cells, and/or the first and third cells, may be different cells. On the other hand the first and second cells, and/or the second and third cells, and/or the first and third cells, may include at least one cell in common. Considering the simplest case of one cell in each case, therefore, the same cell may be used as both first cell and second cell for example.

Any combination is possible within the above. As one example, the second and third cells may be the same cell(s) and may be different from the first cell. In the event that multiple cells are selected as any of the first, second and third cells, there may be partial overlap. For example, the second and third cells may each be single cells which are each the same as one of a plurality of cells selected to be first cells.

The above mentioned reason for the request for resources may include:
a requirement for uplink resources on a specific cell; or
a lack of response to at least one previous request.

The characteristics of an uplink channel for transmission of the request may include at least one of:
the path loss of the uplink channel for transmission of a random access request (which may be related to the power level required for the random access request);
the path loss of the uplink channel for transmission of a scheduling request (which may be related to the power level required for the scheduling request);
the bandwidth of the cell;
resources configured in the cell for requests for uplink resources; and
expected latency in granting resources.

The preference of the network may include:
a cell indicated in a configuration signalled by the network; and/or
cells among the plurality of cells which are activated for the terminal.

In any method as defined above the at least two cells, from which the terminal may select at least one cell (first cell) for transmission of the request for uplink resources, include a primary cell and a secondary cell, and the cell indicated in a configuration by the network is a secondary cell.

The request for uplink resources may take various forms including a scheduling request (such as the SR of LTE) or a random access request (such as a PRACH signature in LTE).

Thus, in one embodiment of the method, the terminal detects that resources are available for a scheduling request on at least one selected cell, and transmitting a scheduling request as the request for resources.

In another embodiment, the terminal detects that no resources are available for a scheduling request on a selected cell, and in this case the terminal transmits a random access request as the request for uplink resources.

As already indicated, in the case of applying the method to an LTE-compliant network, the random access request may be a PRACH signature. In this case, preferably, the network configures in advance at least one PRACH signature for use as the request for resources.

In this case, the selection of PRACH signature by the terminal is a selection of one characteristic of the signal used to transmit the request.

As another possible characteristic, a subframe, and/or subcarriers for transmission of the request may be selected by the terminal.

In any method as defined above, preferably, the plurality of cells are cells which are activated or prepared for the terminal.

According to a second aspect of the present invention, there is provided a wireless communication network comprising a terminal and a plurality of base stations, the terminal arranged to communicate with the network via at least two cells of a plurality of cells and to transmit a request for uplink resources, wherein the terminal is arranged to select:
at least one cell from among said plurality of said cells for transmission of said request;
a resource for transmission of said request from among a plurality of resources provided by a cell; and
a characteristic of a signal used to transmit said request; and to perform the selection in dependence on at least one of:-
the reason for the request;
the characteristics of an uplink channel for transmission of the request; and
the preference of the network.

According to a third aspect of the present invention, there is provided a terminal for use in a wireless communication network comprising a plurality of base stations, the terminal arranged to communicate with the network via at least two cells of a plurality of cells and to transmit a request for uplink resources, wherein the terminal is arranged to select:
at least one cell from among said plurality of said cells for transmission of said request;
a resource for transmission of said request from among a plurality of resources provided by a cell; and
a characteristic of a signal used to transmit said request;
and to perform the selection in dependence on at least one of:-
the reason for the request for uplink resources;
the characteristics of an uplink channel for transmission of the request; and
the preference of the network.

According to a fourth aspect of the present invention, there is provided a base station controlling at least one cell of a plurality of cells serving a terminal in a wireless communication network, and arranged to:
receive a request for resources from the terminal on at least one first cell;
respond to the request for resources by notifying the terminal, via at least one second cell, of a grant of resources; and
the resources being resources on at least one third cell;
wherein the base station is arranged to select the second cell independently of the first cell.

In a further aspect, the present invention provides software in the form of computerreadable instructions which, when executed by a processor of radio equipment, provides the base station or the terminal as defined above. Such software may be recorded on one or more non-transitory storage media.

The term "cell" in this specification is to be interpreted broadly. For example, it is possible to refer to communication channels associated with a cell being transmitted from or by the cell (in the downlink), or transmitted to a cell (in the uplink), even if the transmission or reception is actually carried out by one or more antennas or antenna ports of a base station. Whilst the term "cell" normally implies the provision of both a downlink and an uplink, this is not essential and in the present invention, at least one cell may be an uplinkonly cell (UL cell) or downlink-only cell (DL cell). Moreover the term "cell" may be regarded as equivalent to "carrier" unless demanded otherwise by the context. The term "cell" is intended also to include sub-cells, which could be sub-divisions of a cell based on using particular antennas or corresponding to different geographical areas within a cell. References to performing certain actions "at a cell" generally implies performing those actions in a base station which provides that cell. The cells may be associated with different base stations or with the same base station. The term "base station" itself has a broad meaning and encompasses, for example, an access point or transmission point. The terms "network" and "system" are used interchangeably in this specification and intended to have an equivalent meaning, and the "E-UTRAN" of LTE is one possible network/system to which the present invention may be applied.

In general, and unless there is a clear intention to the contrary, features described with respect to one aspect of the invention may be applied equally and in any combination to any other aspect, even if such a combination is not explicitly mentioned or described herein.

As is evident from the foregoing, embodiments of the present invention involve signal transmissions between cells and terminals (UEs) in a wireless communication system.

The cells are associated with one or more base stations. A base station may take any form suitable for transmitting and receiving such signals. It is envisaged that the base stations will typically take the form proposed for implementation in the 3GPP LTE and 3GPP LTE-A groups of standards, and may therefore be described as an eNodeB (eNodeB) (which term also embraces Home eNodeB) as appropriate in different situations. However, subject to the functional requirements of the invention, the base station may take any form suitable for controlling the use of radio resources, which resources may be organized as cells or otherwise. Thus, functions envisaged to be performed by a base station could be performed by an eNodeB, a mobile base station, a mobile terminal or a relay device, and no limitation is to be implied.

Similarly, in the present invention, each terminal may take any form suitable for transmitting and receiving signals from base stations. For example, the terminal may take the form of a user equipment (UE), subscriber station (SS), or a mobile station (MS), or any other suitable fixed-position or movable form. For the purpose of visualising the invention, it may be convenient to imagine the terminal as a mobile handset (and in many instances at least some of the terminals will comprise mobile handsets), however no limitation whatsoever is to be implied from this.

Embodiments of the present invention provide for transmission of a random access request, or a scheduling request (SR), following triggering of the scheduling request using a cell selected from a set of cells by the mobile terminal according to defined criteria, such as: network preference, expected latency, reason for transmission (e.g. lack of availability of SR resources, lack of response to a UE's SR transmission), or channel quality. Thus, in embodiments, the mobile terminal selects at least one cell suitable for transmission of the random access request or scheduling request, and/or selects for this purpose a resource selected from among a set of resources assigned in advance, and/or selects a characteristic of a signal used to transmit the request. The selected at least one cell, also referred to as a "first cell", need not be, but could be, the same as at least one cell ("third cell") with respect to which resources are being requested, or will be allocated. Meanwhile, notification to the network of a resource allocation (scheduling grant) in response to the request will be made on a cell ("second cell") which need not be the same as the either the cell(s) used for the request, or the cell(s) with respect to which resources are granted.

Determination of the cell ("third cell") with respect to which a resource allocation is made may be made in various ways including determination by the network, or by the mobile terminal indicating a preference by its selection of a resource from among an assigned set of resources, or by other signaling. For example, the techniques disclosed in the applicant's co-pending European Patent Application No. 13175803.9 may be used. Here, "preference" can include a requirement to receive resource on a particular cell (for example because data is awaiting transmission in a data stream associated with that cell). However, the determination of third cell is ultimately made or confirmed by the network.

In a "Small Cell" scenario for 3GPP LTE, a terminal may be simultaneously served by a macro cell and one or more small cells. These may operate at different frequencies, and have different bandwidths, traffic loading etc. When suitable uplink resources are not provided for data (PUSCH) or scheduling requests (SR) the invention allows the terminal to select a suitable uplink cell for a random access transmission (PRACH) to request such resources. A RACH transmission may also take place if SR has been transmitted more than a defined number of times without PUSCH resources being granted. Use of the most appropriate cell for the PRACH transmission would improve the achievable data rate and system capacity.

### Brief Description of the Drawings

Reference is made, by way of example only, to the accompanying drawings in which:
Figure 1 shows a network topology in LTE;
Figure 2 illustrates the principle of a Small Cell Network (SCN);
Figure 3 illustrates channels at each of a plurality of protocol layers in LTE;
Figure 4 shows how LTE channels are allocated to a PCell and SCell in a SCN;
Figure 5 illustrates an example of a conventional radio resource allocation signalling procedure of an LTE-based system;
Figure 6 is a simplified flowchart of a procedure employed in embodiments of the present invention;
Figure 7 is a schematic block diagram of a terminal for use in the present invention; and
Figure 8 is a schematic block diagram of a base station for use in the present invention.

### Detailed Description

In general, unless otherwise indicated, the embodiments described below are based on LTE, where the network (wireless communication system) comprises multiple eNodeBs, each controlling one or more DL cells, and at least some of the downlink cells having a corresponding UL cell. Each DL cell may serve one or more terminals (UEs) which may receive and decode signals transmitted in that serving cell. In order to control the use of transmission resources in time, frequency and spatial domains for transmission to and from the UEs, the eNodeB sends control channel messages (PDCCH or EPDCCH) to the UEs. A PDCCH/EPDCCH message typically indicates information such as the resources to be used by a data transmission and whether the data transmission will be in the uplink (using PUSCH) or downlink (using PDSCH). The resource assignments granted by the eNodeB in the DL are determined using channel state information. This is provided by feedback from the UE based on channel measurements made using reference signals which may be transmitted by the eNodeB for each cell that it supports. This feedback typically consists of one or more instances of a data rate in the form of a channel quality indicator (CQI), a precoding matrix indicator (PMI) and rank indicator (RI).

The current mechanisms in LTE for reporting uplink buffer status were designed under the assumption of a single uplink carrier for control signalling such as requests for resources. For the Small Cell case, this does not allow such requests for resources to be routed via the uplink carrier which would be most appropriate for such transmissions.

For example, in a typical case a macro cell and a small cell would be controlled by different eNodeBs, which may schedule uplink transmissions independently. However, assuming that the macro cell would be more heavily loaded and/or have a smaller bandwidth, unless some other factors apply (e.g. the macro cell has much better channel conditions), control signalling such as requests for resources should be routed via the small cell.

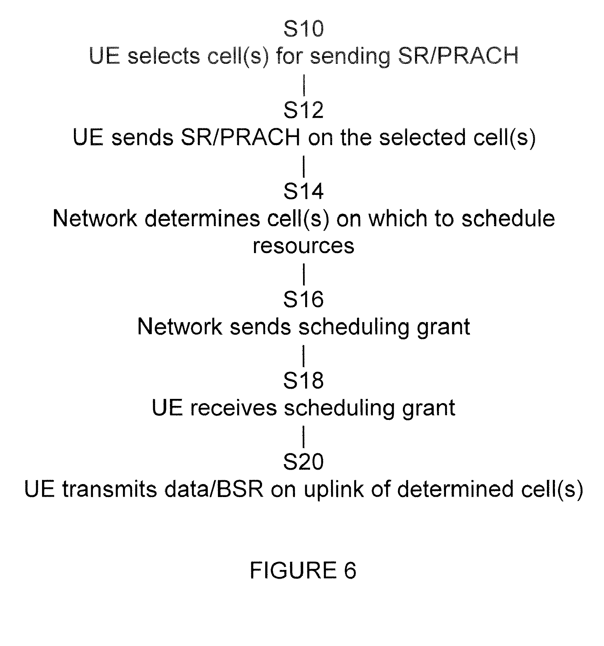

It is assumed to begin with that the UE has some data ready for transmission, but lacks resources (on PUSCH) with which to send the data (or with which to send a Buffer Status Report, BSR). The procedure in embodiments of the present invention is shown in Figure 6.

Firstly (step S10), the UE selects a cell to use for transmission of a request for resources. Selection of this cell (or cells) is the main subject of embodiments. The request for resources can take the form of a scheduling request SR on PUCCH, or random access request on PRACH. In embodiments, the selection may involve selecting a specific signature, and/or a specific subframe within which to transmit the request. In this way, the UE generates a signal having particular characteristics.

Secondly, (S12) the UE sends the request on the cell (or cells) so selected. In response (S14) the network determines a cell for which (with respect to which) it can grant resources, also called a "scheduling grant", for the UE's UL transmission. Here, "the network" refers at least to the eNB controlling the selected cell, but may also involve an eNB controlling another serving cell of the UE. Although step S14 is performed on the network side, the determination may be guided by a preference or requirement indicated by the UE.

Then (S16) the network transmits to the UE, on at least one cell, a grant of resources, the resources being resources applying to the determined at least one cell. In step S18, the UE receives from the network the notification of the grant of resources applying to the determined cell. The cell used for this notification is not necessarily the same as the cell selected for the UE's request. The cell used to carry the notification may, for example, be the cell for which the grant of resources has been made (i.e. the determined cell), but this is not essential. Finally, (S18), the UE transmits a BSR, and/or its UL data for transmission, on the uplink of the cell determined in step S14.

It will be apparent from the above summary that conceptually, there are cells of three distinct types in terms of selection, though there may be overlap between them:
(i) a first cell or cells used by a UE to send a request for resources (S10/S12 in Fig. 6);
(ii) second cell or cells used by the network to notify the UE of a scheduling grant (S16/S18 in Fig. 6); and
(iii) third cell or cells to which the scheduling grant applies, in other words on which the UE may transmit its data or a BSR (S14/S20 in Fig. 6).

Each type may be selected independently of one or more of the others. Thus, in the simplest example of employing a single cell in each instance, it is possible for the UE to send, using a first cell, a request for resources, to which the network responds with a grant of resources applying to a third cell, this grant being notified via a second cell.

It will further be apparent that first and third cells are at least UL cells whilst a second cell requires at least a DL cell. The present invention is mainly concerned with selection of a cell or cells as first cell(s) and optionally also with the UE's preference of third cell.

The above principle mainly applies to the first to third embodiments described below. A fourth embodiment modifies the procedure in that the selection by the terminal in step S10 is of a resource within an assigned set of resources, or of a signal having particular characteristics (such as a specific signature within a set of signatures) on the same cell.

Thus, the basic principle of the invention is to enable a signal with particular characteristics, and sent on a particular cell or using a particular resource on a cell to be used for requesting resources by a UE. The signal characteristics and/or cell are determined in dependence on one or more factors such as:
- Network preference
- Configured resources or parameters of a cell (e.g. periodicity of subframes with SR resources)
- UE preference
   ○ e.g. based on expected power consumption on using the cell
- The reason for transmission (e.g. lack of response to SR transmission)
- Expected latency in granting resources
- The characteristics of one or more channel(s) on which the signal may be transmitted (which might dynamically depend on radio channel conditions), such as
   ○ cell condition (e.g. congestion)
   ○ cell bandwidth or available capacity

Other factors which might be taken into account in embodiments may include:
- The characteristics of a channel on the cell for which resources are requested (which might dynamically depend on radio channel conditions)
   ○ e.g. Available capacity or data rate (which may depend on loading from other traffic and the channel bandwidth, which could be the same as the cell bandwidth or system bandwidth).
   ○ Whether the channel can support a preferred service
   ○ Cell condition (e.g. congestion)

Having outlined the principle of the invention, embodiments will now be described in more detail.

We assume by way of example, for the purpose of describing the embodiments, that a UE is configured to be served by two cells: a macro cell and a small cell on which all physical channels may be used. One of the serving cells is denoted the primary cell or PCell; and the other is denoted a secondary cell or SCell. Normally, the macro cell would be the PCell and the small cell would be the SCell, but this is not limiting. The use of at least one of the cells in UL and/or DL may be activated or deactivated by signalling.

In the first to third embodiments below, if a UE has data to transmit in the UL, but no suitable PUSCH resources are available, the UE may select a cell on which to send a scheduling request on PUCCH using SR resources. If there is no suitable SR resource available, the UE may select a cell on which to send PRACH to request PUSCH resources. PRACH may also be used if the number of SR transmissions on PUCCH, without receiving a grant for PUSCH, exceeds a threshold. Typically, the SR would apply to one subframe. The details may depend on configuration.

In a fourth embodiment, if a UE has data to transmit in the UL, but no suitable PUSCH resources are available, the UE may select a resource within a set of pre-defined SR resources with which to send a scheduling request on PUCCH. If there is no suitable SR resource available, the UE may select a PRACH signature within a set of pre-defined PRACH signatures as a request for PUSCH resources.

### First Embodiment

In a first embodiment any UL data may be transmitted via PUSCH on either (or both) serving cells. Resources for scheduling requests, in the form of SR on PUCCH, may also be configured on either, neither or both cells. In this embodiment it is assumed that an SR is triggered when the UE has data to transmit, without the SR necessarily being associated with a specific cell. In a given subframe, if SR is triggered then the following apply:
- If there are SR resources on only one of the cells, this cell is used for transmission of SR.
- If there are SR resources on both cells, then both cells are used for transmission of SR.
- If there are no SR resources on any cell in any subframe, then PRACH is transmitted.
   ○ Possible criteria for selection of the cell (or cells) for PRACH transmission - as first cell(s) referred to above - include:
      ■ Fixed in specification to be the PCell
      ■ Fixed in specification to be the SCell
      ■ Cell indicated in a configuration signalled by the network.
      ■ Expected latency in granting resources
      ■ The path loss of the uplink channel for PRACH transmission (which may be related to the power level required for PRACH)
      ■ The available data rate for PUSCH on the cell for which resources are requested
      ■ System bandwidth
      ■ UE preference

To explain some of the above criteria in more detail, "Fixed in specification to be the PCell" corresponds to the criterion implied by the existing LTE standard. However, it would be equally possible to fix the cell as the SCell by specification, or more likely, to allow the network to configure the SCell as the cell to be used, as per the third possibility above.

"Expected latency in granting resources" refers to the delay in obtaining a grant of resources due to both latency on the cell for sending the request, and latency on the cell (if different) on the cell used to transmit the scheduling grant. Note that this may be a different cell; for example, the cell used to notify the UE of the scheduling grant might be the cell for which UL resources are being granted.

"System bandwidth" means the bandwidth of each cell. For example PRACH could be sent on the cell with the greatest system bandwidth.

"UE preference" refers to the UE preference for the cell on which to send the request, rather than any preference of cell to use for its subsequent UL data transmission.
○ The configuration of PRACH (e.g. PRACH resources, and whether the selection is a random preamble or a previously configured dedicated preamble) may be generic for any purpose. Alternatively there could be a configuration specifically for this case of requesting resources. For example:-
   ■ The preamble signature (or signatures) to use for PRACH following triggering of SR on a given cell may be configured. Preferably, this would be done by configuring all UEs served by a given PCell with particular signatures, and ideally with different signatures for each of the UEs. This would allow the use of contention free RACH, where the network is not only aware of which UE is sending PRACH, but also that this corresponds to a request for UL resources. This can lead to the eNB sending a suitable grant of PUSCH resources immediately after the PRACH is received.

In this case, it is not necessary for both cells to be controlled by the same eNB. If the cells are provided by separate eNBs, these can communicate and coordinate. If for some reason coordination is not possible, the UE might be granted resources on two cells at the same time, but this is not a problem as it should be able to transmit on both.

As a variation, one cell is selected according to defined criteria. Possible criteria could be:
○ Fixed in specification to be the PCell
○ Fixed in specification to be the SCell
○ Cell indicated in a configuration signalled by the network
○ The reason for transmission (e.g. lack of response to previous SR transmission on one of the cells)
○ Expected latency in granting resources
○ The path loss of the uplink channel for SR transmission (which may be related to the power level required for SR)
○ The available data rate for PUSCH on the cell for which resources are requested
○ System (i.e. cell) bandwidth
○ UE preference

### • All pending SRs are cancelled if a criterion is met (e.g. BSR is transmitted)

As already mentioned, although the response to the SR (or PRACH) may be made via the cell on which the request was made, this is not necessarily the case. In other words the "second" and "third" cells referred to with respect to Fig. 6 need not be the same. For example a response from the network transmitted via a single DL cell (second cell) may cover grant of resources on two UL cells (third cells), of which one UL cell may correspond to the DL cell used to transmit the response.

### Second Embodiment

A second embodiment is like the first embodiment, except that in addition, if the maximum number of SR transmissions according to a counter, is exceeded without cancellation of pending SRs, then PRACH is transmitted. Here, for example, the count may be of SR transmitted on any cell, or alternatively SR transmitted on one specific cell.

Possible criteria for selection of the cell (or cells) for this PRACH transmission could be:
○ Fixed in specification to be the PCell
○ Cell indicated in a configuration signalled by the network.
○ Expected latency in granting resources
○ The path loss of the uplink channel for PRACH transmission (which may be related to the power level required for PRACH)
○ The available data rate for PUSCH on the cell for which resources are requested
○ System (i.e. cell) bandwidth
○ UE preference
○ The configuration of PRACH may be generic or specifically for this case of requesting resources.

In a variation of either of the preceding embodiments, if a response to SR/PRACH requests transmitted on one cell is not received, for example within a given number of attempts, the SR (or PRACH) is transmitted on a different cell.

The principle according to the first or second embodiment may be applied selectively to either or both of SR (or PRACH) attempts via the different cells. It would be possible to reserve use of the invention to determination of the cell to be used as a potentially different cell, following unsuccessful SR (or PRACH) attempts transmitted on a cell without use of the invention (having used a technique described in the applicant's co-pending European Patent Application No. 13175803.9, for example). Conversely, if the principle of the invention is applied to the SR (or PRACH) attempts transmitted on the one cell referred to in the preceding paragraph, the invention need not be applied to via the SR (or PRACH) via the different cell.

### Third Embodiment

In a third embodiment, which otherwise is like the first embodiment, scheduling requests may be triggered independently for different cells, for example depending on data streams associated with each cell. In other words the terminal can identify a requirement for grant of resources on any of a plurality of cells, corresponding to the "third cells" referred to earlier. Here, the data streams may each correspond to one of the Logical Channels mentioned in the introduction, or alternatively to the Logical Channel Groups.

In this embodiment, it is assumed that a SR can be triggered with respect to a specific data stream, and it is possible that a data stream is associated with a cell. Thus, in this embodiment the UE does not necessarily select, as the "first cell", the cell most suitable for transmitting the request but rather uses its selection of "first cell" to indicate a requirement (or preference) with respect to the "third cell".

Therefore, in this embodiment, the request for resources, transmitted via a "first cell" in the sense described with respect to Fig. 6, indicates at least one cell with which the data stream, for which SR was triggered, is associated. Such at least one cell corresponds to the "third cell" referred to with respect to Fig. 6 and will be referred to as such, even though conceptually distinct (since the network has not yet granted the requested resources for data transmission).

In the case of SR, the at least one "third cell" can be indicated within a field of the SR message set aside for this purpose.

In the case of PRACH, the UE can indicate the "third cell" by its choice of signature, the UE having been configured with a set of signatures sufficient to cover any of the serving cells.

In this case, possible criteria for selection of the "first cell(s)" for sending a resource request, include:-
- If the SR is triggered with respect to a data stream which corresponds to a particular cell ("third cell"), and there are SR resources on the cell, that cell may be used for transmission of SR.
- If there are no SR resources on the cell for which the scheduling request is triggered ("third cell") in any subframe, then PRACH is transmitted on that cell.
- All pending SRs are cancelled if a criterion is met (e.g. BSR is transmitted).

Thus, in this embodiment, the selection of the "first cell" is made having regard to the "third cell" with respect to which resources are sought, although as before this third cell (or cells) actually used will ultimately be determined by the network.

In a variation of the third embodiment, if a scheduling request is triggered for more than one cell (in other words, if there are a plurality of "third cells" for which the UE wishes to receive a resource allocation), then one cell is selected for transmission of the scheduling request. The criteria could be similar to those in the first embodiment, which may mean that the cell selected for transmission of the scheduling request ("first cell") is different from any of the more than one cell for which requests are triggered ("third cells").

In variations of the preceding embodiments, one selection option may be to send a request for resources via more than one uplink channel substantially simultaneously. In other words there may be more than one "first cell".

In any of the preceding embodiments a metric may be computed for each of the two cells, and the cell with the highest value of the metric is selected as the "first cell" for sending the request. As an example of such a metric, signal strength in the downlink may be used for example, on the basis that a good signal strength in DL will tend to imply a good UL channel. Alternatively the cell with the best DL SINR may be selected.

In a variation, an offset may be applied to the metric value for one cell. This offset may be determined by specification, determined according to a rule, or signalled from the base station. The purpose of this is to make it more (or less) likely for a given cell to be selected, in dependence upon network preference. For example it may be desirable to reduce loading on the PCell by preferring use of Scells to send requests for resources.

The preceding embodiments may be adapted for the case of more than two cells, for example by computing a metric for each cell and selecting, as the "first cell" for transmission of the request, the cell with the highest value of the metric. One or more of the cells may be activated or deactivated, and not included in the selection process when deactivated. Here "deactivated" means inactive either in the sense of not currently in use by that UE, or in the sense of being temporarily shut down, for example if the eNodeB is powered down.

### Fourth Embodiment

In a fourth embodiment, rather than selecting at least one cell for transmission of a request for uplink resources, the UE selects among a plurality of resources and/or other signal characteristics provided on the same cell for making such a request.

Thus, in the case of SR for example, the network previously assigns a set of resources available for SR on PUCCH of a serving cell of the UE, which may be conveniently (but is not necessarily) the PCell.

By its selection of at least one specific resource among the assigned set of resources with which to transmit the request for uplink resources, the UE indicates its preference for at least one "third cell", that is the cell for which the UE would like to receive a scheduling grant for transmission of its uplink data. The selection may be between SR resources on PUCCH in a given subframe and/or between different subframes. The UE preference for the third cell may be indicated by use of a specific combination of resources such as the subframe and the resource within a subframe. Thus, this embodiment is conceptually similar to the third embodiment but now the UE indicates its preference of third cell in a different way.

Likewise, in the case of PRACH, the network may previously assign a set of PRACH signatures for the UE to use on the PCell. This would preferably be a distinct set of signatures from those conventionally used in a random access procedure for gaining initial access to the network, and reserved specifically for use of UEs to indicate their preference of third cell. By its selection of at least one specific signature as the request for uplink resources, the UE conveys its preference to the network.

As a further additional or alternative variation the UE may make a selection between different frequency domain resources (e.g. different sets of subcarriers) and/or time domain resources (e.g. different subframes).

As in the preceding embodiments, the UE may make more than one selection. In this instance, in place of selecting multiple cells for transmitting a request, the UE may select multiple resources, allowing multiple requests to be transmitted via the same cell or via different cells.

As a further variation the UE preference for the third cell may be indicated by selection of a combination of resources and/or signal characteristics such as a combination of a particular signature and subframe.

The assigned set of resources may be common for all the UEs served by the PCell, or alternatively the assignment could be on a per-UE basis (that is, at least partly specific to each UE).

Thus, in this embodiment only a single cell is required for transmission of the request. This first cell is known in advance, but as in the preceding embodiments, the second and third cells are determined by the network (taking into account the UE's preference in the case of the third cell). Also, as before, the second and third cells may each be more than one cell and may be different from the first cell or may overlap with the first cell.

The fourth embodiment may be combined with any of the preceding embodiments to provide greater flexibility. That is, the UE could select not only the first cell for transmission of the request, but also at the same time a specific resource from within a set of resources assigned in advance on that cell, and/or a characteristic of the signal used to convey the request, if the cell has been so configured.

The fourth embodiment may also be combined with a preceding embodiment in the following way. Assuming that a UE begins by following the procedure according to the fourth embodiment, if a response to SR/PRACH requests transmitted on the one cell via any of the pre-assigned resources is not received, for example within a given number of attempts, the procedure of any of the first to third embodiments may be used to transmit the SR (or PRACH) on a different cell.

Both procedures (selection of first cell, and selection of a specific resource and/or signal characteristic on the same cell) might be configured for possible use in the same network and the UE notified of the procedure to be followed in view of current conditions such as number of cells available, loading on the PCell, and so on. In this way it would be possible for UEs to switch between both methods of indicating a preference.

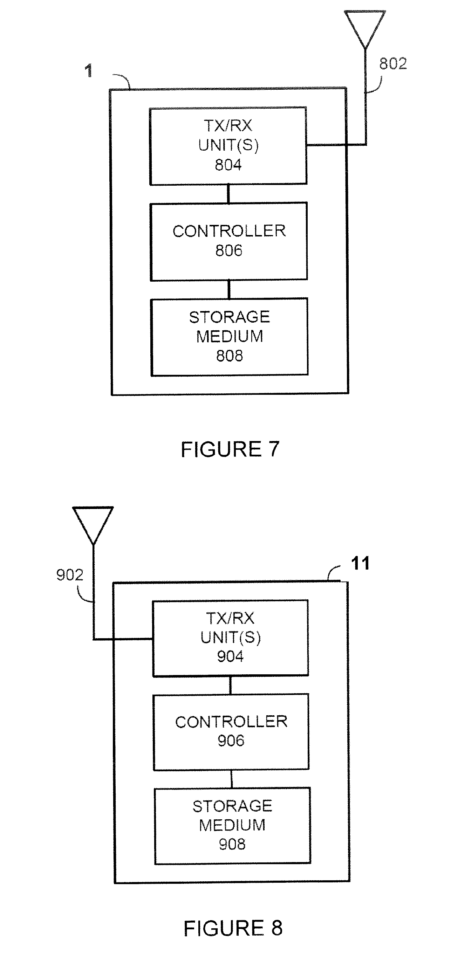

Figure 7 is a block diagram illustrating an example of a UE 1 to which the present invention may be applied. The UE 1 may include any type of device which may be used in a wireless communication system described above and may include cellular (or cell) phones (including smartphones), personal digital assistants (PDAs) with mobile communication capabilities, laptops or computer systems with mobile communication components, and/or any device that is operable to communicate wirelessly. The UE 1 includes transmitter/receiver unit(s) 804 connected to at least one antenna 802 (together defining a communication unit) and a controller 806 having access to memory in the form of a storage medium 808. The controller 806 may be, for example, Microprocessor, digital signal processor (DSP), application-specific integrated circuit (ASIC), field-programmable gate array (FPGA), or other logic circuitry programmed or otherwise configured to perform the various functions described above, such as selecting a suitable cell on which to transmit PRACH or SR in the manner outlined above. For example, the various functions described above may be embodied in the form of a computer program stored in the storage medium 808 and executed by the controller 806. The transmission/reception unit 804 is arranged, under control of the controller 806, to receive signals from the cells such a scheduling grant and so forth as discussed previously.

Figure 8 is a block diagram illustrating an example of an eNodeB 11 to which the present invention may be applied. The base station includes transmitter/receiver unit(s) 904 connected to at least one antenna 902 (together defining a communication unit) and a controller 906. The controller may be, for example, Microprocessor, DSP, ASIC, FPGA, or other logic circuitry programmed or otherwise configured to perform the various functions described above, such as providing a scheduling grant for the UE in response to a scheduling request. For example, the various functions described above may be embodied in the form of a computer program stored in the storage medium 908 and executed by the controller 906. The transmission/reception unit 904 is responsible for transmission of reference signals, reception of signals from the UE 1 including scheduling requests and PRACH signatures, and so on under control of the controller 906.

To summarise, embodiments of the present invention may provide for transmission of a random access request or scheduling request following triggering of a scheduling request (SR) using a cell selected from a set of cells by the mobile terminal, and/or a resource selected from among a set of resources assigned in advance, according to defined criteria, such as: network preference, expected latency, reason for transmission (e.g. lack of availability of SR resources, lack of response to a UE's SR transmission), or channel quality.

Various modifications are possible within the scope of the present invention.

References above to "cell", "first cell", "second cell" and "third cell" in every case should be understood as referring to one or more cells, except where the context demands otherwise.

As already mentioned, the term "cells" in the above description is to be interpreted broadly. Cells need not each have a different geographical area, or a different base station. In general, cells can be defined on a downlink, uplink, or on both. There may be different numbers of uplink and downlink cells. Therefore, although it may be convenient to think of a cell as having both uplink and downlink resources, this is not necessarily the case. Thus, references to a UE selecting a cell ("first cell") or transmitting data on a cell ("third cell"), imply at least an uplink cell. Meanwhile, a DL cell used for notification of a scheduling grant ("second cell") may be unrelated to the UL cell to which the grant applies.

The invention is equally applicable to LTE FDD and TDD, and the principle applied to other communications systems such as UMTS. If the invention were to be included in 3GPP specifications for LTE it would probably be in the following form:-
- in 3GPP TS 36.331, new RRC signalling to configure a set of cells on which the UE may transmit data, and resources for scheduling requests -
- in 3GPP TS 36.321, new UE behaviour in relation to transmission of SR/PRACH

### Industrial Applicability

In a "Small Cell" scenario for 3GPP LTE, a terminal may be simultaneously served by a macro cell and one or more small cells. These may operate at different frequencies, and have different bandwidths, traffic loading etc. When suitable uplink resources are not provided for data (PUSCH) the invention allows the terminal to select a suitable uplink cell and/or resource for transmission of SR or for a random access transmission (PRACH), and/or characteristic of a signal used to request such resources. A RACH transmission may also take place if SR has been transmitted more than a defined number of times without PUSCH resources being granted. Use of the most appropriate cell for the PRACH transmission will improve the achievable data rate and system capacity.

## Claims

1. A wireless communication method in which a terminal communicates with a network via at least two cells of a plurality of cells and transmits a request for uplink resources, wherein the terminal selects at least one of:
at least one cell from among said plurality of said cells for transmission of said request,
a resource for transmission of said request from among a plurality of resources provided by a cell; and
a characteristic of a signal used to transmit said request;
wherein the selection is in dependence on at least one of:
the reason for said request;
the characteristics of an uplink channel for transmission of said request; and
the preference of the network.

2. The wireless communication method according to claim 1 further comprising:
the terminal sending said request via at least one first cell in accordance with the selection;
the network responding to said request by notifying the terminal, via at least one second cell, of a grant of resources; and
the resources being resources applying to at least one third cell.

3. The wireless communication method according to claim 2 wherein the first and second cells, and/or the second and third cells, and/or the first and third cells, are different cells.

4. The wireless communication method according to claim 2 wherein the first and second cells, and/or the second and third cells, and/or the first and third cells, include at least one cell in common.

5. The wireless communication method according to any preceding claim wherein the reason for said request includes:
a requirement for uplink resources on a specific cell; or
a lack of response to at least one previous request.

6. The wireless communication method according to any preceding claim wherein the characteristics of an uplink channel for transmission of said request include at least one of:
the path loss of the uplink channel for transmission of a random access request;
the path loss of the uplink channel for transmission of a scheduling request;
the bandwidth of the cell;
resources configured in the cell for requests for uplink resources; and
expected latency in granting resources.

7. The wireless communication method according to any preceding claim wherein the preference of the network includes:
a cell indicated in a configuration signalled by the network; and/or
cells among said plurality of cells which are activated for the terminal.

8. The wireless communication method according to claim 7 wherein the at least two cells include a primary cell and a secondary cell, and the cell indicated in a configuration by the network is a secondary cell.

9. The wireless communication method according to any preceding claim further comprising the terminal detecting that resources are available for a scheduling request on at least one selected cell, and transmitting a scheduling request as said request.

10. The wireless communication method according to any preceding claim further comprising the terminal detecting that no resources are available for a scheduling request on a selected cell, and transmitting a random access request as said request.

11. The wireless communication method according to claim 10, applied to an LTE-compliant network and wherein the random access request is a PRACH signature, the PRACH signature selected by the terminal as one characteristic of the signal used to transmit said request.

12. The wireless communication method according to claim 11 further comprising the network configuring in advance at least one PRACH signature for use as said request.

13. A wireless communication network comprising a terminal and a plurality of base stations, the terminal arranged to communicate with the network via at least two cells of a plurality of cells and to transmit a request for uplink resources, wherein the terminal is arranged to select:
at least one cell from among said plurality of said cells for transmission of said request;
a resource for transmission of said request from among a plurality of resources provided by a cell; and
a characteristic of a signal used to transmit said request;
and to perform the selection in dependence on at least one of:
the reason for said request;
the characteristics of an uplink channel for transmission of said request; and
the preference of the network.

14. A terminal for use in a wireless communication network comprising a plurality of base stations, the terminal arranged to communicate with the network via at least two cells of a plurality of cells and to transmit a request for uplink resources, wherein the terminal is arranged to select:
at least one cell from among said plurality of said cells for transmission of said request;
a resource for transmission of said request from among a plurality of resources provided by a cell; and
a characteristic of a signal used to transmit said request;
and to perform the selection in dependence on at least one of:
the reason for said request;
the characteristics of an uplink channel for transmission of said request; and
the preference of the network.

15. A base station controlling at least one cell of a plurality of cells serving a terminal in a wireless communication network, and arranged to:
receive a request for resources from the terminal on at least one first cell;
respond to said request by notifying the terminal, via at least one second cell, of a grant of resources; and
the resources being resources on at least one third cell;
wherein the base station is arranged to select the second cell independently of the first cell.

## Amended claims

### Amended claims in accordance with Rule 137(2) EPC.

1. A wireless communication method in which a terminal (1) transmits a request for uplink resources, wherein the terminal (1) selects at least one of:
at least one cell from among a plurality of cells (10, 20, 22, 24) for transmission of said request,
a resource for transmission of said request from among a plurality of resources provided by a cell; and
a characteristic of a signal used to transmit said request; **characterised in that** said plurality of cells (10, 20, 22, 24) include at least two cells via which the terminal (1) is communicating, and **in that** the selection is in dependence on at least one of:
the reason for said request;
the bandwidth of the cell;
resources configured in the cell for requests for uplink resources;
expected latency in granting resources; and
the preference of the network.

2. The wireless communication method according to claim 1 further comprising:
the terminal (1) sending said request via at least one first cell in accordance with the selection;
the network responding to said request by notifying the terminal (1), via at least one second cell, of a grant of resources; and
the resources being resources applying to at least one third cell.

3. The wireless communication method according to claim 2 wherein at least one of:
the first and second cells;
the second and third cells; and
the first and third cells,
are different cells.

4. The wireless communication method according to claim 2 wherein at least one of:
the first and second cells;
the second and third cells; and
the first and third cells,
include at least one cell in common.

5. The wireless communication method according to any preceding claim wherein the reason for said request includes:
a requirement for uplink resources on a specific cell; or
a lack of response to at least one previous request.

6. The wireless communication method according to any preceding claim wherein the preference of the network includes at least one of:
a cell indicated in a configuration signalled by the network; and
cells among said plurality of cells (10, 20, 22, 24) which are activated for the terminal (1).

7. The wireless communication method according to claim 6 wherein the at least two cells include a primary cell (10) and a secondary cell (20, 22, 24), and the cell indicated in a configuration by the network is a secondary cell.

8. The wireless communication method according to any preceding claim further comprising the terminal (1) detecting that resources are available for a scheduling request on at least one selected cell, and transmitting a scheduling request as said request.

9. The wireless communication method according to any preceding claim further comprising the terminal (1) detecting that no resources are available for a scheduling request on a selected cell, and transmitting a random access request as said request.

10. The wireless communication method according to claim 9, applied to an LTE-compliant network and wherein the random access request is a PRACH signature, the PRACH signature selected by the terminal (1) as one characteristic of the signal used to transmit said request.

11. The wireless communication method according to claim 10 further comprising the network configuring in advance at least one PRACH signature for use as said request.

12. A wireless communication network comprising a terminal (1) and a plurality of base stations (11, 21), the terminal arranged to transmit a request for uplink resources, wherein the terminal (1) is arranged to select at least one of:
at least one cell from among a plurality of cells (10, 20, 22, 24) for transmission of said request;
a resource for transmission of said request from among a plurality of resources provided by a cell; and
a characteristic of a signal used to transmit said request; **characterised in that** said plurality of cells (10, 20, 22, 24) include at least two cells via which the terminal (1) is communicating, and **in that** the terminal (1) is arranged to perform the selection in dependence on at least one of:
the reason for said request;
the bandwidth of the cell;
resources configured in the cell for requests for uplink resources;
expected latency in granting resources; and
the preference of the network.

13. A terminal (1) for use in a wireless communication network comprising a plurality of base stations (11, 21), the terminal arranged to transmit a request for uplink resources, wherein the terminal (1) is arranged to select at least one of:
at least one cell from among a plurality of cells (10, 20, 22, 24) for transmission of said request;
a resource for transmission of said request from among a plurality of resources provided by a cell; and
a characteristic of a signal used to transmit said request; **characterised in that** said plurality of cells (10, 20, 22, 24) include at least two cells via which the terminal (1) is communicating, and **in that** the terminal (1) is arranged to perform the selection in dependence on at least one of:
the reason for said request;
the bandwidth of the cell;
resources configured in the cell for requests for uplink resources;
expected latency in granting resources; and
the preference of the network.
